# EUROPEAN PATENT APPLICATION

(11) **EP 1 249 329 A2**
(43) Date of publication of application: **16.10.2002**
(21) Application number: 02002010.3
(22) Date of filing: 06.02.2002
(51) Int. Cl.: B29C 43/18, B29C 35/02, B29C 51/10

(54) **Method for making external structural parts of a household electrical appliance**

(30) Priority: 12.04.2001 IT MI010799
(71) Applicant: WHIRLPOOL CORPORATION, Benton Harbor Michigan 49022 (US)
(72) Inventor: Armando, Luisi, Whirlpool Europe s.r.l., 21025 Comerio (IT)
(74) Representative: Guerci, Alessandro

(57) **Abstract**

A method for obtaining structural parts (13) of a household electrical appliance, such as its door, and in particular for obtaining the door of a refrigerator or dishwasher, said method consisting of feeding a charge of polyurethane reinforced with a charge of organic or inorganic fibres into a cavity (5) of a first half-mould (2), then closing the second half-mould (3) onto this latter to form said structural part; before feeding the charge of reinforced polyurethane (31) a flat sheet (15) is thermoformed directly within the cavity of the first half-mould, on said sheet then being placed the charge of reinforced polyurethane (31) so that the subsequent operation of closing the mould causes the thermoformed body to become integral with the polyurethane charge in the structural part.

## Description

The present invention relates to a method for obtaining external structural parts of household electrical appliance cabinets, in accordance with the introduction to the main claim.

Various methods for obtaining these structural parts are known. For example, with particular but not limiting reference to a refrigerator cabinet door or dishwasher door, a method is known consisting of feeding a charge of structural and/or cellular polyurethane containing organic or inorganic parts, such as glass fibres, into a cavity of a suitably shaped half-mould, then closing a second half-mould onto this cavity to achieve polymerization of the polyurethane. On termination of this stage, the mould is opened and the component or structural part obtained in this manner is extracted and then machined to eliminate those polyurethane parts which exceed the final geometry of the component.

Such a method enables structural parts of a household electrical appliance, such as a refrigerator door, to be quickly obtained, but has the drawback that the part or door obtained in this manner then has to be provided with an outer covering. Two moulds have therefore to be provided, one for the covering, with consequent high production costs.

For this reason the number of available moulds is limited, with consequent limitation on the door shapes obtainable.

In addition, again for the aforesaid cost reasons limiting the available moulds, there is also a limitation on the surface, colour and personalization finishes available.

An object of the present invention is to provide an improved method for obtaining an external structural part of a household electrical appliance, such as a refrigerator or dishwasher door.

A particular object of the invention is to offer a method of the stated type which enables a large number, which can be as great as required, of appliance parts of different shapes by moulds of limited cost and simple and rapid construction.

Another object is to provide a method of the stated type which enables household electrical appliance parts to be obtained with a wide range of possible visible finishes in terms of colour, surface finish, colour brightness and personalized designs based on the type of appliance, its position within a particular type of kitchen (for example light or dark wood) and on the particular type of user.

A further object is to provide a method which offers considerable flexibility of production at high rate obtainable by a high level of automation of the production process.

These and further objects which will be apparent to the expert of the art are attained by a method according to the invention.

The present invention will be more apparent from the accompanying drawing, which is provided by way of non-limiting example and in which: Figures from 1 to 5 schematically show five different stages of the method of the invention, which are implemented in succession.

With reference to said figures, the method of the invention is implemented in a mould 1 comprising a first half-mould 2 and a second half-mould 3. The first half-mould 2 presents a cavity or seat 5 into which there opens a conduit 6 connected to a suction and blowing member 7, for example a pump able to act both as a vacuum pump and a blower. The cavity 5 is bounded by an edge 8. The second half-mould 3 is movable relative to the first (which is preferably fixed) and comprises a body 10 carrying a projecting or male portion 11 arranged to penetrate into the cavity 5 of the first half-mould 2. The body 10 is driven by a usual actuator, for example hydraulic.

The mould 1 is such as to enable an external structural part 13 (such as a door) of a household electrical appliance (such as a refrigerator) of polyurethane material to be obtained. According to the invention, this structural part 13 is obtained simultaneously with the covering of a surface (which is to be visible) thereof with a film or sheet 15 of material carrying decorations, colours or designs which give this part a particular ornamentation. In this manner, by replacing said film 15 with another carrying different designs or decorations, another structural part substantially identical to the first, but with a different appearance, can be obtained in the same mould.

Moreover, the film 15 enables the surface of the corresponding structural part 13 to be covered, so rendering this latter resistant to surface shrinkage following cooling of the part 15 after its moulding.

According to the invention, the aforesaid method is implemented by firstly associating the film 15 with an annular frame 17 able to be disposed on the edge 8 of the first half-mould 2 without preventing closure of the mould 1; the film 15 is secured to the frame 17 in any known manner, for example by clips associated with the frame. The movement of this latter takes place preferably along an axis perpendicular to the first half-mould 2 (i.e. parallel to or coinciding with the axis along which the half-mould 3 is moved; this movement is obtained in known manner, for example by a hydraulic actuator (not shown).

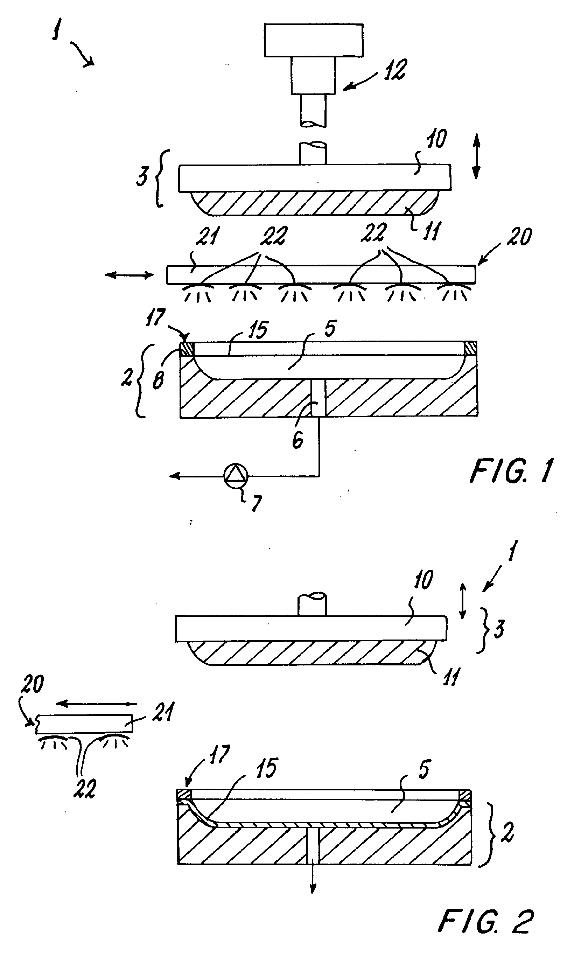

After said frame 17 has been moved onto the edge 8 of the first half-mould 2, a heating member 20 (Figure 1) is placed on this latter by moving it perpendicular to the direction in which the second half-mould 3 is moved. This member is for example a plate 21 carrying a plurality of heating elements 22, for example electrical resistance elements.

The heating member 20 is able to heat the material of the film 15 to its softening point, to enable it to be thermoformed after it has been placed on the edge 8 of the first half-mould 2. This thermoforming is achieved by creating vacuum in the conduit 6 after the film 15 has attained a suitable plasticity point, and has the result of shaping said film in accordance with the cavity 5 of the first half-mould 2.

The film 15 is formed, usually by extrusion, of thermoformable plastic material, such as PVC (polyvinyl chloride), ABS (acrylonitrile butadiene styrene) or modified PE (ethylene copolymer with small quantities of monomers containing carboxyl groups such as methacrylic acid) such as that sold under the brand name Surlyn of the Dupont Company.

If PVC is used, this is a thermoplastic polymer with good self-extinguishing and processability characteristics, in particular with regard to thermoforming.

Preferably the film 15 has a useful thickness between 0.3 and 1.0 mm and presents, on that side not visible on the structural part 13, hence on that in contact with its constituent polyurethane, a layer of adhesive material in the dry state which assumes the plastic adhesive state during the production process and in particular during the heating stage (this latter being necessary for shaping the film within the mould 1). The purpose of the layer of adhesive on the film 15 is to irreversibly stabilize the connection between this film and the polyurethane structure formed within the mould 1 during the production of the structural part 13.

The choice of PVC is related to the fact that it has excellent resistance to chemicals and to the products commonly used domestically for cleaning, good mechanical resistance especially to scratches, and is a material with excellent suitability for coloration in all tones, including metallic effects. The visible side of the film 15 can also have an embossed surface finish, to improve its appearance.

If ABS (a thermoplastic polymer with excellent appearance and mechanical characteristics) is used, the film 15 is prepared with a thickness between 0.7 and 1.0 mm. By virtue of the polymer characteristics, the thermoformed film 15 adheres excellently to the polyurethane structure without the use of adhesives.

The ABS film can also be produced self-extinguishing, in which case the ABS must be mixed with PC (polycarbonate) of self-extinguishing quality during the production of the film 15.

In using modified PE (polyethylene) to produce the film 15, it should be noted that this material is a thermoplastic polymer with good processability, and in particular its formability in a mould under vacuum using only limited heating of the sheet. The film is produced with a thickness from 0.2 to 0.5 mm and possesses a flexibility characteristic. One surface of the film 15 must undergo special treatment during its production (extrusion), this being known as "corona treatment", which enables the film to properly adhere to the underlying polyurethane structure.

However to increase the adhesion power, a layer of adhesive of the type mentioned with regard to the PVC film can be applied to the corona-treated film surface.

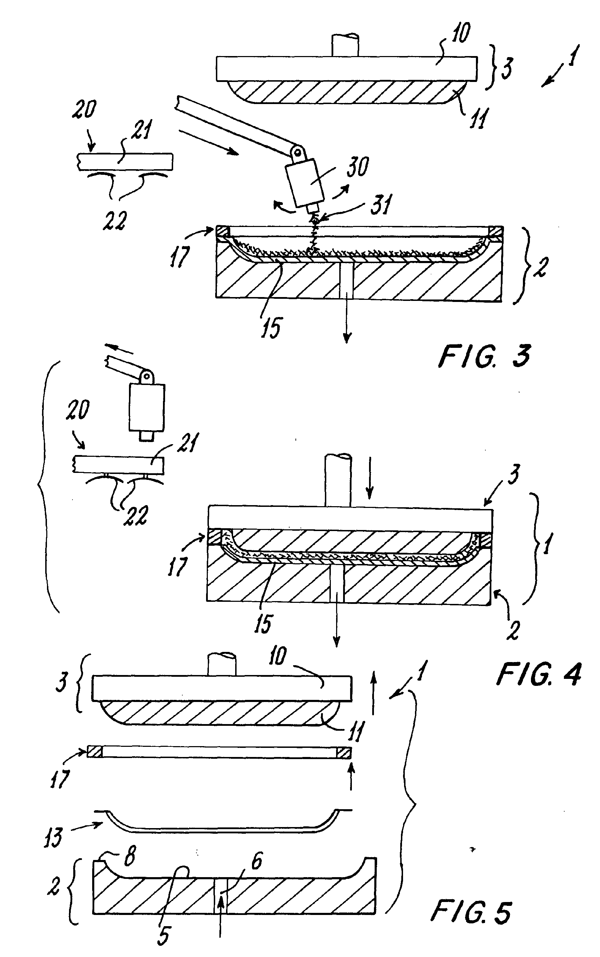

Returning to the various stages of the method of the invention, after the film 15 has been thermoformed to the shape of the cavity 5 of the first half-mould 2, the heating member 20 is removed from the mould 1 (Figure 2) and a usual robotized injection head 30 is positioned above the half-mould 2 to deposit, with oscillating movements, on the film 15 in the half-mould 2 a charge of polyurethane 31 containing organic or inorganic bodies such as glass fibres (Figure 3). On termination of this stage the robotized head 30 is removed from the mould 1 (Figure 4), which is closed by positioning the second half-mould on the first while at the same time creating vacuum in the conduit 6 to maintain the film 15 in contact with the first half-mould.

When the polyurethane has polymerized, the mould 1 is opened (Figure 5) and the part 13 obtained in this manner is extracted from the mould 1 by blowing air through the conduit 6.

The obtained part 13 is then machined to eliminate any polyurethane which exceeds the final geometry of the piece.

It should be noted that component portions or members such as hinges, pins, screws, handles and hooking points can be inserted into or formed in the structural part during the moulding process by using an appropriately designed mould, so that they become integral parts of the final piece.

With the invention, using one and the same mould, external structural parts of household electrical appliances, such as refrigerator or dishwasher doors, can be obtained with various attractive finishes in terms of colours, surface finishes and designs, which can also be personalized. There is also considerable production flexibility and the ability to obtain said parts in many forms and designs using low-cost moulds of easy and rapid construction.

## Claims

1. A method for obtaining structural parts (13) of a household electrical appliance, such as its door, and in particular for obtaining the door of a refrigerator or dishwasher, said method consisting of feeding a charge (31) of polyurethane reinforced with a charge of organic or inorganic fibres into a cavity (5) of a first half-mould (2), then closing the second half-mould (3) onto this latter to form said structural part (13), **characterised in that** before feeding the charge (31) of reinforced polyurethane, an at least partly flat body (15) is thermoformed directly within the cavity (5) of the first half-mould (2), on said body there then being placed the charge (31) of reinforced polyurethane so that the subsequent operation of closing the mould (1) causes the thermoformed body (15) to become integral with the polyurethane charge in the structural part (13).

2. A method as claimed in claim 1, **characterised in that** the thermoformed body (15) is obtained from a previously prepared flat piece of thermoformable material.

3. A method as claimed in claim 2, **characterised in that** the flat body (15) is of polyvinylchloride.

4. A method as claimed in claim 2, **characterised in that** the flat body (15) is of acrylonitrile butadiene styrene or ABS.

5. A method as claimed in claim 4, **characterised in that** the ABS flat body (15) contains polycarbonate.

6. A method as claimed in claim 2, **characterised in that** the flat body (15) is of modified polyethylene, specifically a copolymer of ethylene and small quantities of monomers containing carboxyl groups.

7. A method as claimed in claim 2, **characterised in that** the flat body (15) is obtained by extrusion.

8. A method as claimed in claim 2, **characterised in that** the flat body (15) has a thickness between 0.3 and 1 mm depending on its material of construction.

9. A method as claimed in claim 2, **characterised in that** on that side on which the reinforced polyurethane charge (31) is deposited, the flat body (15) presents a layer of adhesive material.

10. A method as claimed in claim 9, **characterised in that** the layer of adhesive material applied to one side of the flat body (15) is in the dry state and becomes activated into the plastic adhesive state during the thermoforming process.

11. A method as claimed in claims 2 and 7, **characterised in that** during the extrusion, that side of the flat body (15) which is to receive the reinforced polyurethane charge (31) is subjected to surface treatment or "corona treatment" to enable that side to present good adhesion to the polyurethane charge (31) after its polymerization.

12. A method as claimed in claim 11, **characterised in that** on that side of the flat body (15) rendered adhesive by the corona treatment there is deposited a layer of adhesive in the dry state which becomes activated into the plastic state during thermoforming.

13. A method as claimed in claim 2, **characterised in that** the flat body (15) is associated with an annular frame (17) to be positioned on an edge (8) of the first half-mould (2) and to retain the thermoformed body during the insertion of the reinforced polyurethane charge (31), during the subsequent closure of the mould (1) to obtain polymerization of said charge, and during its bonding to the thermoformed body.

14. A method as claimed in claim 1, **characterised in that** a heating member (20) is positioned on top of the first half-mould (2) after the frame (17) with which the thermoformable body (15) is associated has been positioned on its free edge (8), the subsequent activation of the member (20) and the generation of a force on said body (15) being able to bring it into adherence with the wall of the cavity (5) of the first half-mould (2)

15. A method as claimed in claim 14, **characterised in that** the force acting on the flat body (15) to bring it into adherence with the wall of the cavity (5) of the first half-mould (2) is obtained by generating a suction force between said wall and said body (15).

16. A method as claimed in claim 15, **characterised in that** the suction force is obtained by creating a vacuum between the flat body (15) and the wall of the first half-mould via a conduit (6) provided in the first half-mould and opening into its cavity (5), and connected to a suction member (7).

17. A method as claimed in claim 14, **characterised in that** the heating member (20) is moved transversely to the direction of relative movement between the two half-moulds (2, 3).

18. A method as claimed in claim 14, **characterised in that** the frame (14) carrying the thermoformable flat body (15) is movable in the direction of relative movement of the two half-moulds (2, 3).

19. A method as claimed in claims 1 and 16, **characterised in that** the structural part (13) of the household electrical appliance obtained by closing the mould (1) is expelled from this latter after its opening by blowing air into the cavity (15) of the first half-mould (2) through the conduit provided in this latter.

20. An external structural part of a household electrical appliance, such as a refrigerator or dishwasher door, obtained by the method of claim 1.

21. A household electrical appliance, such as a refrigerator or a dishwasher having an external structural part, such as a door, obtained by the method of claim 1.
